# EUROPEAN PATENT APPLICATION

(11) **EP 1 340 630 A1**
(43) Date of publication of application: **03.09.2003**
(21) Application number: 02425117.5
(22) Date of filing: 01.03.2002
(51) Int. Cl.: B60C 23/04

(54) **Connection system between valve and sensor for vehicle tyres**

(71) Applicant: BRIDGEPORT BRASS S.P.A., I-24036 Ponte San Pietro, (Bergamo) (IT)
(72) Inventor: Leo, Leonardo Claudio, 25065 Lumezzane (Brescia) (IT)
(74) Representative: Petruzziello, Aldo

(57) **Abstract**

A connection system between valve and sensor for vehicle tyres is described comprising a valve (10) fitted in a hole (5) of the bead (1) of the rim of the wheel and a sensor (40) connected to the valve (10) and positioned inside the chamber formed between the bead and the tyre to read parameters of the tyre and in conformity transmit electric signals to a receiver positioned outside the tyre chamber. The valve comprises a tail (18) positioned inside the chamber of the tyre and a head (16) fitted outside the chamber to receive an air supply nozzle. The tail (18) of the valve (10) is substantially spherical and engages, in spherical fit relation, in a substantially spherical slot (44) provided in the sensor in order to hold the sensor and allow its self-positioning on the rim bead (1) inside the tyre chamber. The valve (10) comprises locking means (23) positioned outside the tyre chamber to act as a check against the rim bead.

## Description

The present invention relates to a connection system between a valve for inflating vehicle tyres and a sensor suitable to detect some state variables, such as pressure and temperature, indicative of the condition of the tyre.

A valve of this type with pressure sensor is, for example, described in the European patent application EP 751.071. The sensor is in the shape of a substantially rectangular plate and has a shaped side to adapt to the tail end of the tyre valve and two feet to rest on the bead of the rim.

The side of the sensor in contact with the tail of the valve, in line with the tail of the valve, has a through hole to allow the passage of a pin or screw with external thread and internally hollow. This screw engages in screwing relation in an internal thread provided inside the tyre valve, and has a head suitable to lock the sensor on the valve.

A system for connection between valve and sensor of this type has disadvantages.

In fact, the sensor, generally made of plastic, is subject to frequent damage and breakages, especially in the assembly phase.

Moreover, the sensor according to prior art does not adapt optimally to the various configurations of rim bead. As various types of tyre rims are available on the market, this makes it necessary also to provide different positionings of the sensors adaptable to these rims.

Furthermore, the operation to fit the valve and the relative sensor are somewhat lengthy and inconvenient. In fact, the valve must first be fitted into the specific hole in the rim, then the sensor must be positioned in contact with the tail of the valve and on the bead of the rim and lastly the internally hollow screw must be screwed into the tail of the valve, taking care, during tightening, that the sensor is positioned correctly on the bead of the rim. This operation is further complicated by the fact that, during tightening of the screw, the position of the sensor tends to move and the sensor must be re-positioned by the operator.

The object of the present invention is to eliminate the problems of prior art by providing a system for connection between valve and sensor for vehicle tyres which is extremely reliable, safe and able to avoid possible breakages to the sensor.

Another object of the present invention is to provide such a system of connection between valve and sensor for tyres which is extremely versatile and suitable to be adapted to any type of tyre rim.

Yet another object of the present invention is to provide such a system of connection between valve and sensor for tyres which is inexpensive, simple to produce and in particular simple for the operator to fit.

These objects are attained in accordance with the invention with the characteristics listed in the appended independent claim 1.

Advantageous embodiments of the invention are indicated in the dependent claims.

The connection system between valve and sensor for vehicle tyres according to the invention comprises an inflation valve fitted into a hole on the bead of the wheel rim and a sensor connected to the valve and positioned inside a chamber formed between the bead and the tyre to detect tyre parameters and in conformity transmit electric signals to a receiver fitted outside the tyre chamber. The valve comprises a tail part positioned inside the chamber formed between the bead and the tyre and a head part positioned outside the chamber to receive an air supply nozzle.

The principal characteristic of the invention is represented by the fact that the tail part of the valve is substantially spherical and engages, in spherical fit relation, in a substantially spherical slot made in the sensor in order to hold the sensor and allow its self-positioning on the bead of the rim inside the tyre chamber. The valve comprises locking means fitted outside the tyre chamber to act as abutment means against the bead of the rim.

The advantages of the valve and sensor assembly according to the invention are evident. In fact, the spherical fit between valve and sensor allows self-positioning of the sensor in the seat of the bead, inside the tyre chamber. Moreover, this spherical fit guarantees a high degree of safety against any impacts of the tyre edge against the sensor, during inflation of the tyre. In this way possible damage to the sensor is avoided.

Moreover, the spherical fit guarantees high versatility of the valve and sensor assembly allowing positioning of the sensor to be adapted to any configuration of rim bead.

Further characteristics of the invention shall become more apparent from the detailed description below, referring purely to a non-limiting example of embodiment illustrated in the accompanying drawings, in which:
Fig. 1 is a top plan view, showing a portion of a bead of the rim of a vehicle wheel which shows a connection system between sensor and valve according to the invention, in which the concealed parts are shown by dashed line;
Fig. 2 is a sectional view according to the sectional plane II-II in Fig. 1, in which the valve is shown in an axial section;
Fig. 2A is a sectional view as in Fig. 2, in which the wall of the rim bead which receives the valve is inclined differently to Fig. 2;
Fig. 3 is a view from the left of Fig. 1, showing from the rear the sensor fitted raised on the rim bead;
Fig. 4 is a sectional view, as in Fig. 2, showing an exploded view of the sensor and valve assembly and the portion of the rim bead destined to receive the valve and sensor assembly;
Fig. 5 is a perspective exploded view showing a valve of the system according to the invention;
Fig. 6 is a perspective view showing a sensor of the system according to the invention;
Fig. 7 is an enlargement of a detail of Fig. 2, in which a washer has been added for better adaptation of the connection between valve and sensor;
Fig. 7A is a view as in Fig. 7, in which the configuration of the connection washer has been varied.
The connection system between valve and sensor according to the invention shall be described with the aid of the Figures.

Fig. I shows a portion of a rim bead of a vehicle wheel seen from the face suitable to receive the edges of a tyre (not shown in the Figs). The bead is indicated as a whole with the reference number 1.

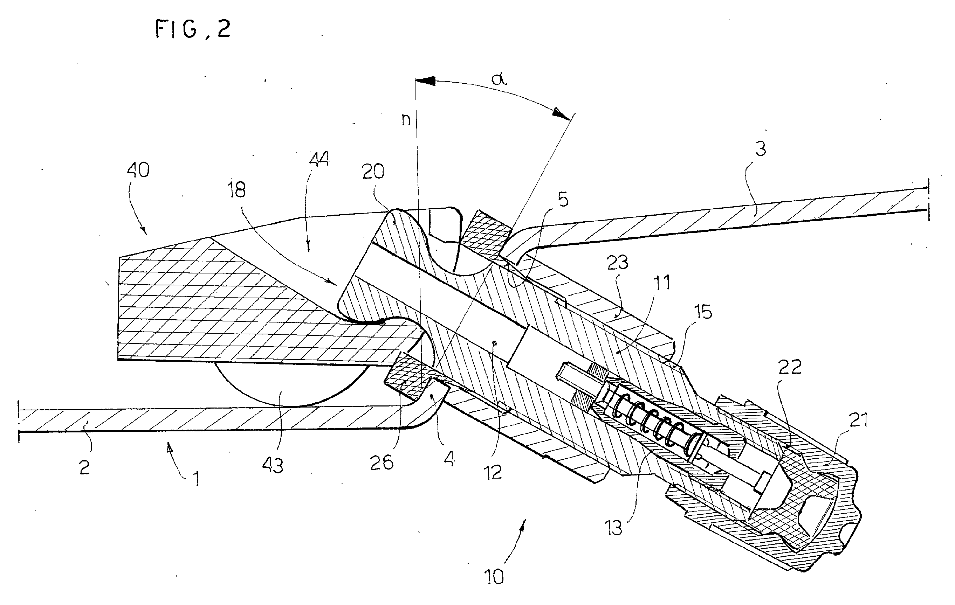

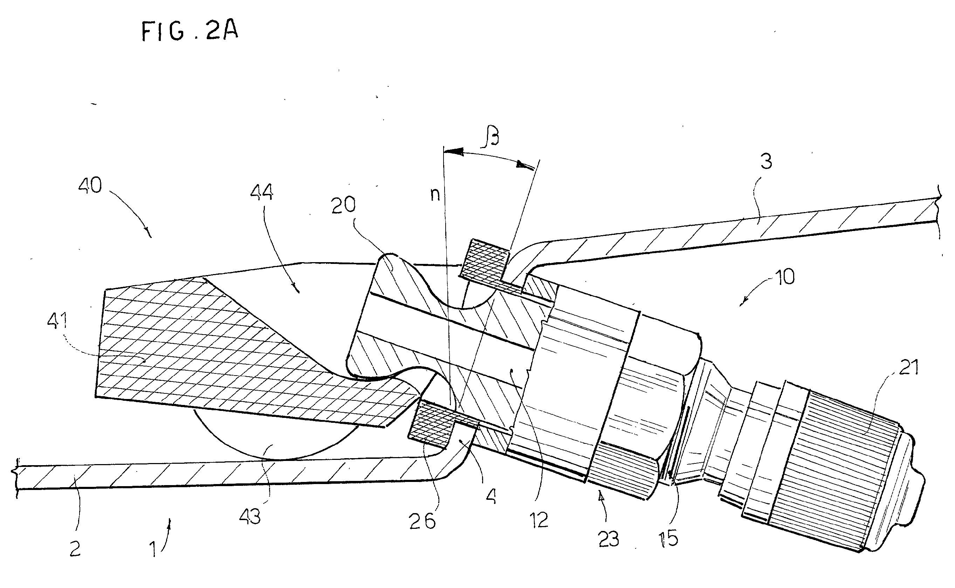

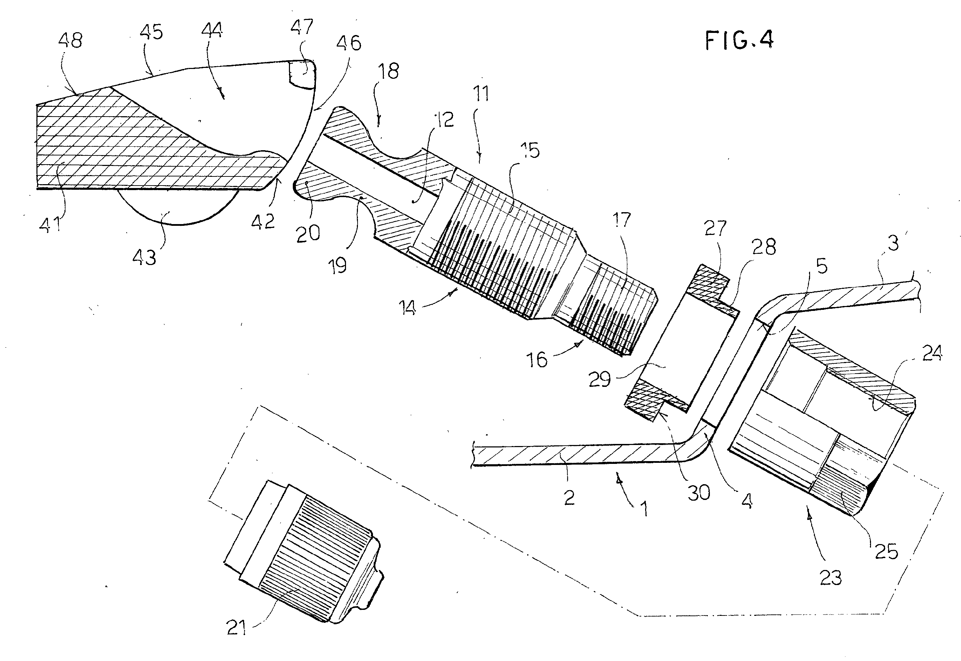

As also shown in Figs. 2 and 4, the bead 1 comprises a recessed part 2 and a raised part 3 in relation to the recessed part 2. The recessed part 2 is connected to the raised part 3 by means of a slanting or inclined wall 4.

As shown in Fig. 2, the inclined wall 4 of the bead has an angle of inclination a in relation to a radial straight line n running towards the centre of the wheel. The angle α varies according to the type of rim employed and generally may be between 10° and 30°.

In the inclined wall 4 of the bead a through hole 5 is made suitable to receive a valve for inflation of the tyre, indicated as a whole with the reference number 10.

The valve 10 comprises a valve body 11 with a substantially cylindrical shape, with an external diameter slightly smaller than the diameter of the hole 5. The valve body 11 is internally hollow and axially has a through duct 12 fitted inside which is an operating mechanism of the valve 13 per se known and therefore not illustrated in detail.

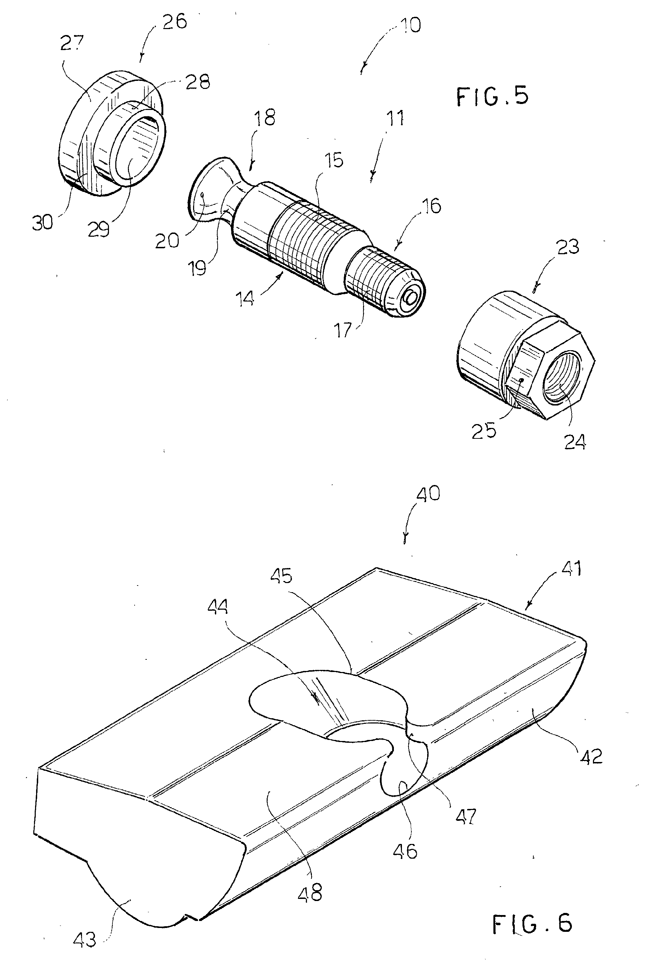

As also shown in Fig. 5, the valve body 11 comprises a cylindrical central portion 14 provided with an external thread 15. From the central portion 15 of the valve body a cylindrical pin 16 with a smaller diameter extends at the front and axially to form the head of the valve. The external surface of the cylindrical pin 16 is provided with an external thread 17.

A substantially rounded tail part 18 extends from the rear of the central portion 15 of the valve body. The tail 18 has a narrower part 19 and a tapered part 20 with an increasing diameter going from the narrower part 19 towards the rear end. The tapered part 20 of the tail 18 of the valve body has a substantially truncated spherical or truncated conical configuration.

The valve 10 also comprises a covering cap 21 provided with an internal thread 22 suitable to screw into the external thread 17 of the pin 16 of the head of the valve body.

The valve 10 also comprises a threaded ring nut 23 with an internal thread 24 suitable to screw into the external thread 15 of the central part 14 of the valve body. The ring nut 23 has a substantially cylindrical shape with an external diameter larger than the diameter of the hole 5 of the slanting wall 4 of the rim bead. The front part of the threaded ring nut 23 facing the head of the valve, has an external profile cut in the shape of a hexagon nut 25 to be rotated by specific tools.

The valve 10 also comprises a gasket 26 with a substantially discoid shape with a through hole 29 suitable to receive the valve body. The gasket 26 has a first disc with a larger diameter 27 and a second disc with a smaller diameter 28. In this way on the disc with the larger diameter 27 an annular contact surface 30 is defined. The disc with the larger diameter 27 has a diameter larger than the diameter of the hole 5 of the slanting wall 4 of the bead 1 and the disc with the smaller diameter 28 has a diameter substantially equal to the diameter of the hole 5 so that it can be force fit inside this to guarantee seal with the edges of the hole 5.

The gasket 26 is fitted to the central part 14 of the valve body. For this purpose the rear part of the central part 14 of the body has, on its external surface, a portion in which the thread 15 is not provided. Moreover, in the portion of the central part 14 without thread there are small grooves or knurls to improve the seal of the gasket 26 with the valve body.

The valve 1 is suitable to hold in position, on the recessed part 2 of the rim bead 1, a sensor, indicated as a whole with the reference number 40. Integrated inside the sensor 40 is the sensitive part suitable to detect state parameters of the tyre, such as pressure and temperature, and the transmission part suitable to transmit electronic signals indicative of the parameters detected to a receiving apparatus fitted on the vehicle.

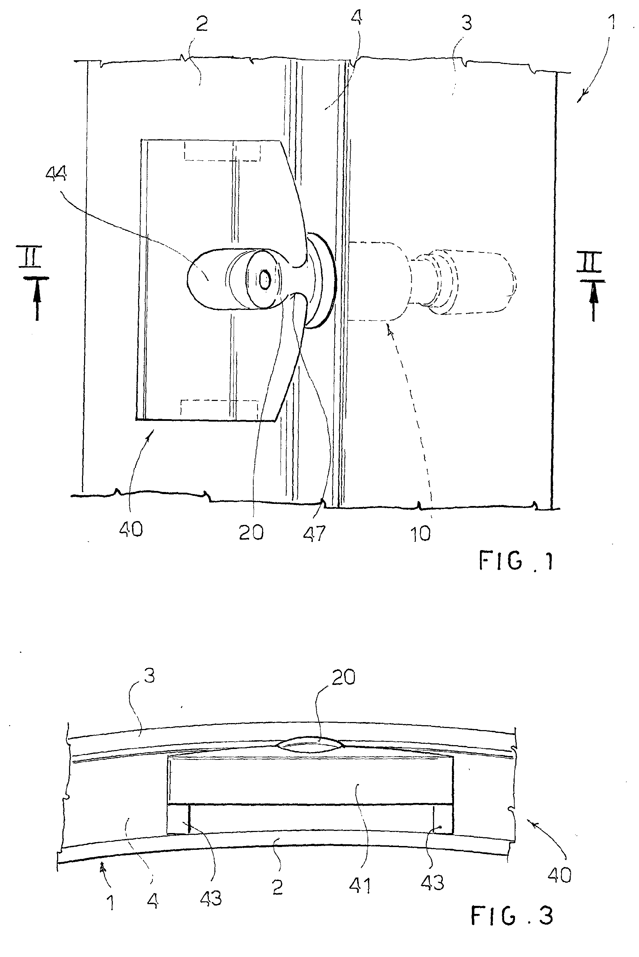

As shown in Figs. 1, 2, 3 and 6, the sensor 40 has a body 41 in the shape of a substantially parallelepiped plate with a rounded front surface 42. The body 41 of the sensor is supported by two feet 43 rested on the two side walls of the body of the sensor.

The feet 43 have a substantially discoid configuration so that they guarantee a substantially rounded resting part to adapt to the various curves of the profile of the recessed part 2 of the bead intended to receive the sensor 40. Moreover, the feet 43 may be produced in elastic material, to yield elastically and adapt to the configuration of the recessed part 2 of the bead.

The central position in the body 41 is provided with a slot 44 that extends from the top wall 48 of the body 41 to the front wall 42. The slot 44 is defined by an elliptical hole 45 on the top surface 48 communicating with a circular hole 46 on the front surface 42. A narrower part 47 of the body 41 of the sensor is provided between the elliptical hole 45 of the top wall 48 and the circular hole 46 of the front wall 42.

In this way the tail part 18 of the valve body 11 can be coupled inside the slot 44 of the body 41 of the sensor. More precisely, the tapered part 20 of the tail part 18 of the valve body is held by the narrower part 47 of the body 41 of the sensor and the narrower part 19 of the tail 18 of the valve body projects from the hole 46 of the front surface 42 of the sensor body.

As the walls which define the slot 44 of the sensor body are substantially spherical or rounded and the external surface of the tapered part 20 of the head of the valve body is also substantially spherical or rounded, a spherical fit is defined between the valve 10 and the sensor 40. That is to say, the sensor 40 is free to rotate around the spherical surface of the tail 18 of the valve 10, in a relation of spherical fit.

Assembly of the assembly composed of the valve 10 and sensor 40 is described below.

The head part 16 of the valve body 11 is inserted into the hole 5 of the inclined wall 4 of the rim bead 1. In this way the head 16 and the central part 14 of the valve body project behind the bead 1 to be accessible to the user and the sensor 40 is set on the part of the bead 1 facing the inner chamber of the tyre.

At this point the user screws the threaded ring nut 23 to the central part 14 of the body. As the ring nut 23 is tightened, the annular edge of the ring nut 23 abuts against the edge of the inclined wall 4 of the bead around the hole 5, drawing the valve body 11 towards it. Consequently the disc with the smaller diameter 28 of the gasket 26 enters the hole 5, the contact surface 30 of the gasket 26 abuts against the part of the inclined wall 4 around the hole 5, and the front surface 42 of the sensor abuts against the disc with the larger diameter 27 of the gasket 26.

In this way, the gasket 26 guarantees the air seal around the hole 5. Instead, the sensor 40 self-positions itself on the recessed part 2 of the bead 1 and at the same time is locked in position abutting against the gasket 26.

Fig. 2 A shows a bead with an inclined part 4 with an angle of inclination β differing from the angle α in the example in Fig. 2. In this case, thanks to spherical fit between the tail 18 of the valve 10 and the slot 44 of the sensor 40 and thanks to the discoid feet 43 of the sensor, the sensor adapts perfectly to the configuration of the bead 1.

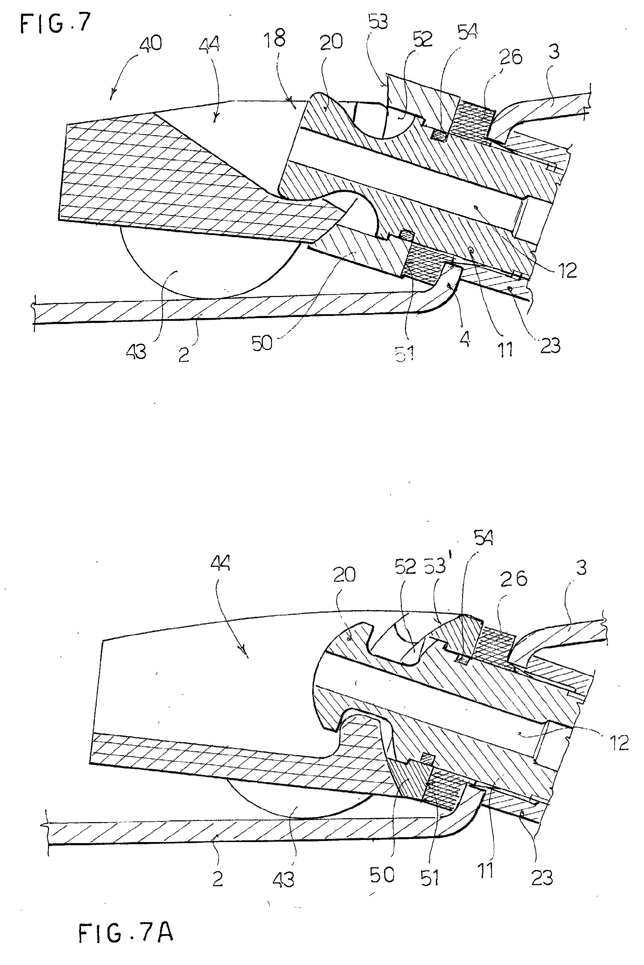

Fig. 7 shows a variant, in which between the gasket 26 and the edge of the sensor 40 a washer 50 is interposed fitted around the valve body 11. For this purpose the part of the valve body 11 fitted inside the rim is appropriately extended to receive the washer 50. The washer 50 may be produced in metal material, such as aluminium.

The washer 50 has an axial through hole 52 through which the body 11 of the valve may pass. On the external surface of the part of the body 11 inside the rim an annular groove is provided suitable to receive a gasket 54, such as an O-ring, interposed between the body 11 and the washer 50 to guarantee correct seal of the washer.

The washer 50 has a flat lower surface 51 that abuts against the top surface of the gasket 26.

In the example in Fig. 7 the external edge part of the sensor around the slot 44 is substantially convex. Consequently the washer 50 has a substantially concave top surface 53 to engage, in spherical fit relation, with the external edge part of the sensor 40.

Fig. 7A shows an example in which the external edge portion of the sensor around the slot 44 has a substantially concave configuration. In this case to adapt the external edge of the sensor, the washer 50 has a substantially convex top surface 53', in the shape of a spherical cap, to coupling, in spherical fit relation, with the external edge portion of the sensor 40.

The fitting of the washer 50 allows perfect connection of the valve with the sensor and allows the valve to be adapted to sensors with different configurations. Moreover, the washer 50 allows correct compression of the gasket 26 on the entire contact surface between washer and gasket.

Numerous variations and modifications to details apparent to those skilled in the art, may be made to the present embodiments of the invention, without however departing from the scope of the invention set forth in the appended claims.

## Claims

1. Connection system between valve and sensor for vehicle tyres comprising:
- a valve (10) fitted in a hole (5) of the bead (1) of the wheel rim, said valve comprising a substantially cylindrical valve body (11) comprising a tail part (18) positioned inside a chamber formed between the bead and the tyre and a head part (16) positioned outside said chamber to receive an air supply nozzle, and
- a sensor (40) connected to said valve (10) and positioned inside said chamber formed between the bead and the tyre to detect tyre parameters and accordingly transmit electric signals to a receiver positioned outside said tyre chamber,
**characterized in that**
said tail part (18) of said valve (10) is substantially spherical and engages, in spherical fit relation, in a substantially spherical slot (44) provided in said sensor in order to hold said sensor and allow its self-positioning on the rim bead (1) inside the tyre chamber and said valve (10) comprising locking means (23) positioned outside said tyre chamber to act as an abutment against said rim bead.

2. Connection system between valve and sensor as claimed in claim 1, **characterized in that** said locking means (23) comprise a threaded ring nut with a external diameter larger than the diameter of said hole (5) of the bead (1) to come into contact with the part of the bead (1) around the hole (5), said threaded ring nut (23) being provided with internal thread (24) which screws into an external thread (15) provided in a central part (14) of said valve body.

3. Connection system between valve and sensor as claimed in claim 2, **characterized in that** said threaded ring nut (23) has a portion of external side surface (25) substantially cut in the shape of a hexagon nut to receive a special tool.

4. Connection system between valve and sensor as claimed in any of the previous claims, **characterized in that** said valve comprises a gasket (26) fitted on the central part of the valve body, said gasket being intended to provide seal around said hole (5) of the rim bead and provide an abutment against said sensor (40).

5. Connection system between valve and sensor as claimed in claim 4, **characterized in that** said gasket (26) has a substantially discoid shape comprising a first disc with a larger diameter (27) with external diameter larger than the diameter of said hole (5) of the rim bead and a second disc with a smaller diameter (28) with external diameter substantially equal to the diameter of said hole (5), said disc with a smaller diameter being fitted around the edges of the hole (5) and said disc with a larger diameter being positioned inside said tyre chamber, abutting against the part of the bead around the hole (5) and against the front surface of said sensor (40).

6. Connection system between valve and sensor as claimed in claim 4 or 5, **characterized in that** a washer (50) is provided around the valve body, interposed between said gasket (26) and the external edge of the sensor (40), said washer (50) guaranteeing perfect coupling with the edge of the sensor and at the same time allowing even compression of the gasket (26).

7. Connection system between valve and sensor as claimed in claim 6, **characterized in that** said washer (50) has a substantially flat bottom surface (51) to come into contact with the surface of the gasket (26) and a substantially concave top surface (53) to engage in relation to spherical fit with a substantially convex external edge portion of said sensor.

8. Connection system between valve and sensor as claimed in claim 6, **characterized in that** said washer has a substantially flat bottom surface (51) to come into contact with the surface of the gasket (26) and a substantially convex top surface (53) to engage in spherical fit relation with a substantially concave external edge portion of said sensor.

9. Connection system between valve and sensor as claimed in any of the previous claims, **characterized in that** said sensor (40) has a substantially rectangular body (41), supported by two feet (43), substantially discoid, said feet (40) have a rounded resting part to adapt to the configuration of the rim bead inside the tyre chamber.

10. Connection system between valve and sensor as claimed in claim 9, **characterized in that** said feet (43) of the sensor (40) are elastic in order to yield elastically so as to adapt to the configuration of the rim bead inside the tyre chamber.

11. Connection system between valve and sensor as claimed in any of the previous claims, **characterized in that** said slot (44) of the sensor is defined by a first hole, substantially elliptical (45), on the top surface (48) of the sensor body communicating with a second substantially circular hole (46) on the front surface (42) of the sensor and by a narrower part (47) of the sensor body provided between said first hole (45) and said second hole (46).
